# EUROPÄISCHE PATENTSCHRIFT

(11) **EP 3 115 673 B1**
(45) Veröffentlichungstag und Bekanntmachung des Hinweises auf die Patenterteilung: **22.11.2017**
(21) Anmeldenummer: 16176647.2
(22) Anmeldetag: 28.06.2016
(51) Int. Cl.: F16L 55/1645, F16L 55/165, B29L 23/00, B29C 39/02, B29C 39/10, B29K 105/16

(54) **VERFAHREN UND VORRICHTUNG ZUR HERSTELLUNG EINER ROHRAUSKLEIDUNG**
METHOD AND DEVICE FOR MANUFACTURING PIPE CLADDING
PROCEDE ET DISPOSITIF DESTINES A LA FABRICATION D'UN REVETEMENT TUBULAIRE

(30) Priorität: 10.07.2015 DE 102015212964
(43) Veröffentlichungstag der Anmeldung: 11.01.2017
(73) Patentinhaber: resinnovation GmbH, 76761 Rülzheim (DE)
(72) Erfinder: Heuser, Mirko, 76761 Rülzheim (DE)
(74) Vertreter: Taruttis, Stefan Georg

(56) Entgegenhaltungen:
- WO-A1-2015/049041
- FR-A1- 2 893 973
- US-A- 5 779 948

## Beschreibung

Die Erfindung betrifft ein Verfahren zur Herstellung einer Rohrauskleidung in einem Rohr, das fixiert sein kann, beispielsweise im Erdreich verlegt sein kann, durch Einbringen einer härtbaren Masse. Das Verfahren erlaubt die Verwendung einer Masse, die mit einem Starter versetzt ist, sodass sie ohne weiteres innerhalb kurzer Zeit aushärtet. Generell erlaubt das Verfahren die Verwendung von härtbaren Massen, die ohne ein Starten der Härtung durch erhöhte Temperatur und/oder Bestrahlung aushärten, insbesondere ohne Bestrahlung und bei der Umgebungstemperatur. Das Verfahren erlaubt auch den Einsatz hochgefüllter härtbarer Massen und kann ohne Gewebe oder Flies durchgeführt werden.

### Stand der Technik

Die US 5,779,948 A beschreibt ein Verfahren zur Auskleidung eines Rohrs, bei dem ein Abschnitt des Rohrs mit einer Masse gefüllt wird und anschließend ein zylindrischer Formungskörper durch den gefüllten Rohrabschnitt mittels Druck geschoben und durch ein Zugseil gesteuert gezogen wird.

Die FR 2 893 973 A1 beschreibt zur Auskleidung eines Rohrabschnitts mit Zementmasse eine aufblasbare Membran, die über den Rohrabschnitt in einem Abstand zur Rohrwand positioniert ist und dort einen ringförmigen Bereich freilässt, der an beiden Enden durch endständige Membranabschnitte verschlossen ist, die an der Rohrwand anliegen. Der ringförmige Bereich an der Rohrwand wird mit Zementmasse gefüllt und nach dem Härten kann die Membran nach Druckablassen aus dem Rohr gezogen werden.

Die WO 2015/049041 A1 beschreibt eine Manschette für einen Inspektions- oder Reinigungsmolch für ein Rohr, die sich an Querschnittsänderungen des Rohrs anpasst.

Die AT 398 818 B beschreibt zur Herstellung einer Rohrauskleidung in einem Rohr einen zylindrischen Glättkörper, der zur Zentrierung hinter einem Zentrierschlitten angebracht ist, der durch das Rohr gezogen wird. Der Glättkörper weist an dem Ende, das an den Zentrierschlitten angrenzt, eine Dichtung auf, die an der Rohrinnenwand dichtend anliegt. Der zwischen dem Glättkörper und der Rohrinnenwand gebildete ringförmige Spalt wird mit härtender Kunstharzmasse vollgepumpt, insbesondere bis zum Erreichen eines Drucks, der das vollständige Auffüllen des Spalts anzeigt, bevor der Glättkörper weitergezogen wird. Auf die Innenseite der Kunstharzmasse kann nach Weiterbewegung des Glättkörpers eine Schlauchfolie aufgebracht werden.

Die US 2011/0297243 A1 beschreibt das Auskleiden eines Rohrs ohne einen mit Harz vorgetränkten Gewebsschlauch einzusetzen, indem eine schlauchförmige Blase, die mit Innendruck beaufschlagt wird, sich in einem Rohr fortschreitend umschlägt, während mittels eines Verteilers auf das sich umschlagende Ende der Blase eine härtbare Masse aufgetragen wird. Dabei drückt die fortschreitend sich umschlagende Blase die Masse gegen die Rohrwandung. Nach dem Aushärten der Masse zwischen der unter Druck stehenden Blase und der Rohrwandung kann die Blase entfernt werden.

Ein Nachteil dieses Verfahrens liegt darin, dass die Blase kontinuierlich Druck auf die Masse ausübt und die Masse in Löcher in der Rohrwand drücken kann, was zu einem ungleichmäßigen Querschnitt der Masse führen kann. Ein weiterer Nachteil liegt darin, dass das Verfahren an beiden Enden des auszukleidenden Rohrabschnitts Zugang erfordert.

### Aufgabe der Erfindung

Der Erfindung stellt sich die Aufgabe, ein alternatives Verfahren zur Herstellung einer Rohrauskleidung und eine dazu verwendbare Vorrichtung bereitzustellen, wobei bevorzugt das Verfahren keine Haltezeit erfordert, während die Rohrauskleidung über ihre gesamte Länge für Härtung durch Druckbeaufschlagung gegen das Rohr gepresst wird.

### Beschreibung der Erfindung

Die Erfindung löst die Aufgabe mit den Merkmalen der Ansprüche, insbesondere mit einer Vorrichtung und einem Verfahren zur Herstellung einer Rohrauskleidung in einem Rohr durch Einbringen einer härtbaren Masse, wobei die Masse durch einen Auslass in einen ringförmigen Spalt gepumpt wird, der von der Rohrwand und der in dem Rohr angeordneten Vorrichtung gebildet wird. Die Vorrichtung weist einen Former auf, der in einem vorbestimmten Abstand zur Rohrwand entlang der Rohrachse entlang der Rohrwand geführt wird. Der Former wird in dem Rohr in einem vorbestimmten Abstand zur Rohrwandung entlang der Rohrachse geführt, sodass der ringförmige Spalt zwischen Rohrwandung und Former einen vorbestimmten Querschnitt hat.

Die Masse wird von dem Former gegen die Rohrwandung gehalten. Dadurch, dass der Former längs entlang der Rohrwand geführt bzw. bewegt wird, kann die härtbare Masse in dem ringförmigen Spalt soweit aushärten, dass sie eigenstabil ist und dann, wenn der Former weiter längs entlang der Rohrwandung und von einem Abschnitt der härtbaren Masse weg bewegt wird, eigenstabil die Rohrauskleidung bildet.

Der ringförmige Spalt zwischen der Rohrwand und dem Former weist vorzugsweise umlaufend denselben Querschnitt auf, bzw. der Former ist umlaufend jeweils im gleichen Abstand zur Rohrwand angeordnet.

Die Vorrichtung weist einen Auslass für die Masse auf, an den zumindest eine Zuleitung für die Masse angeschlossen ist und der auf der Rohrwand zugewandten Formungsoberfläche des Formers mündet. Die Masse wird durch den Auslass zwischen den Former und die Rohrwand gepumpt und von dem an den Auslass anschließenden Former gegen die Rohrwandung gehalten, während der Former in einem vorbestimmten Abstand längs entlang der Rohrwandung geführt wird. Entsprechend weist die hergestellte Rohrauskleidung einen Querschnitt auf, der gleich dem Querschnitt des ringförmigen Spalts zwischen Rohrwand und Former ist.

Der Auslass wird beispielsweise durch eine Vielzahl von Teilauslässen oder einen ringförmigen Auslass gebildet, der an einem ersten Ende des Formers angeschlossen ist.

Der Former, bzw. dessen Formungsoberfläche, ist ausgehend von seiner Längsachse in einen ersten Radius angeordnet, wobei der Abstand des ersten Radius zur Rohrwand, die in einem zweiten Radius liegt, den Radius des ringförmigen Spalts bestimmt. Am ersten Ende des Formers ist eine Wand mit einer Dichtkante angeordnet, die den ringförmigen Spalt am ersten Ende gegenüber der Rohrwand verschließt. Daher kann eine durch den Auslass in den ringförmigen Spalt gepumpte härtbare Masse nicht über das erste Ende des Formers hinaustreten, bzw. nicht am ersten Ende aus dem ringförmigen Spalt austreten.

Die Vorrichtung kann an den Querschnitt des auszukleidenden Rohrs angepasst werden, z.B. durch Ausbilden der Wand mit Dichtkante entsprechend dem zweiten Radius, in dem die Rohrwand liegt und des Formers, bzw. von dessen der Rohrwand zugewandten Formungsoberfläche, um einen Abstand kleiner als der zweite Radius in einem ersten Radius.

Die Wand mit Dichtkante und der Former, bzw. dessen Formungsoberfläche, können unabhängig voneinander z.B. einen mehreckigen Querschnitt, insbesondere einen ovalen oder runden Querschnitt aufweisen. Bevorzugt weist die Wand mit Dichtkante einen zweiten Radius auf, der zur Rohrwand verschieblich ist, z.B. reibschlüssig zur Rohrwand ist, und bevorzugt eine Form gleich dem Querschnitt des auszukleidenden Rohrs aufweist, während der Former eine Formungsoberfläche aufweist, die einen kleineren ersten Radius aufweist, so dass die Formungsoberfläche einen Querschnitt hat, der unabhängig von der radialen Erstreckung der Wand mit Dichtkante einen kleineren Querschnitt ist. Der Querschnitt der Formungsoberfläche im ersten Radius kann mit Abstand zum Querschnitt der Dichtkante, die im zweiten Radius liegt, z.B. oval oder rund sein oder den Querschnitt der Dichtkante verkleinert aufweisen. Die Beschreibung von Vorrichtung und Verfahren mit Bezug auf runde Querschnitte ist daher stellvertretend auch für andere Querschnitte. Die Dichtkante ist bevorzugt reibschlüssig gegen die Rohrwand angeordnet, z.B. dadurch, dass die Dichtkante gegen die Rohrwand belastet ist. Die Dichtkante kann z.B. dadurch gegen Rohrwand belastet sein, dass die Wand am ersten Ende des Formers elastisch ausgebildet ist und die Dichtkante im unbelasteten Zustand, in dem die Vorrichtung nicht in dem auszukleidenden Rohr angeordnet ist, in einen größeren Radius als den ersten Radius bringt, so dass die Dichtkante in einem durch die Rohrwand belasteten Zustand, in dem die Vorrichtung in dem auszukleidenden Rohr angeordnet ist, federnd gegen die Rohrwand belastet ist bzw. gegen die in das Rohr eingebrachte Schlauchhülle. So kann die Dichtkante im unbelasteten Zustand in einem Radius liegen, der bis zu 20%, bevorzugt bis zu 10% oder bis 5% oder bis 2% größer als der erste Radius ist.

Der Former weist bevorzugt eine umfänglich geschlossene zylindrische Oberfläche auf. Die Oberfläche des Formers kann beispielsweise von einem Rohrabschnitt ausgebildet sein, alternativ von sich überlappenden Lamellen, die sich beispielsweise parallel oder in einem spitzen Winkel oder etwa senkrecht zur Längsachse des Rohrs erstrecken, oder die sich senkrecht oder in einem spitzen Winkel oder senkrecht zur Längsachse des Rohrs erstrecken.

In einem Abstand zur Dichtkante wird der Former bevorzugt von zumindest einem vom ersten Ende beabstandet angeordneten Abstandshalter in einen vorbestimmten Abstand zur Rohrwandung gebracht. Ein solcher Abstandshalter erstreckt sich von dem Former etwa bis in den zweiten Radius, der gleich dem Radius der Rohrwand ist. Der Abstandshalter kann reibschlüssig und/oder mit Belastung gegen die Rohrwand anliegen und sich z.B. ohne Belastung durch Anordnung in dem Rohr bzw. gegen die Rohrwand zum Beispiel bis in einen Radius, der bis zu 20%, bevorzugt bis zu 10% oder bis 5% oder bis 2% größer als der zweite Radius ist, in dem die Rohrwand angeordnet ist.

Für die Bewegung des Formers entlang des Rohrs wird der Former z.B. entlang des Rohrs gezogen, z.B. von einem Zugmittel, das an seinem ersten Ende angreift, z.B. im Bereich des ersten Radius oder im Bereich der Längsachse.

Vorzugsweise weist der Former zwei oder mehr Abstandshalter auf, die auf seinem Umfang verteilt sind, z.B. zumindest 3 gleichmäßig um den Umfang verteilte Abstandshalter.

Der zumindest eine Abstandshalter kann starr oder elastisch sein und optional ein endständiges Laufrad aufweisen. Ein Abstandshalter kann als Stift ausgebildet sein, der über den Former hinausragt, beispielsweise in Form eines eingeschraubten Bolzens, z.B. einer Schraube. Alternativ ist der Abstandshalter, der über den Former hinaussteht, bzw. sich über den ersten Radius hinaus erstreckt, blattförmig, mit der schmalen Seite dem ersten Ende bzw. der Dichtkante zugewandt. Ein Abstandhalter kann sich entlang des Radius des Formers erstrecken oder in einem Winkel gegen die Radiale des Formers geneigt sein, um z.B. eine gewisse Federwirkung für den Former gegenüber der Rohrwand zu bilden.

Das Führen bzw. Bewegen des Formers während des Verfahrens entlang der Rohrwand bzw. entlang der Rohrachse führt dazu, dass die Masse in dem ringförmigen Spalt zwischen dem ersten Ende und dem gegenüberliegenden zweiten Ende des Formers härtet, wobei der Grad der Härtung, der am zweiten Ende erreicht wird, zumindest für die Eigenstabilität der Masse ausreicht, wohingegen die Aushärtung bis zur Endfestigkeit auch nach dem Bewegen des zweiten Endes des Formers von der Masse erfolgen kann.

Die Abstandshalter sind in einem axialen Abschnitt angrenzend an das erste Ende des Formers angeordnet, in dem die Masse noch ausreichend fließfähig ist, um die Abstandshalter beim Bewegen des Formers entlang des Rohrs zu umströmen und sich anschließend zusammenzulegen. Der Former ist daher mit einer Geschwindigkeit entlang des Rohrs zu bewegen, dass die Masse Abstandshalter vor Ende der Verarbeitungszeit passiert. Der Former weist daher eine Länge auf, die ausreicht, die Masse bis zur Ausschalzeit zu halten, da die Masse dann eigenstabil ist. Zur Beschleunigung des Härtens der Masse, nachdem diese den zumindest einen Abstandshalter umströmt hat, kann der Former in einem Abschnitt zwischen dem zumindest einem Abstandshalter und seinem zweiten Ende beheizt sein, und/oder das Harz kann vorgewärmt werden, z.B. auf 60 bis 80°C, insbesondere auf 60 bis 70°C, und über isolierte und/oder beheizte Förderleitungen in den Former gepumpt werden.
Durch die Bewegung des Formers entlang des Rohrs erfährt die Masse eine Relativbewegung entlang des Formers von dessen erstem Ende zu dessen zweitem Ende, während die Masse zunehmend aushärtet. Daher weist die Masse bei ihrer Relativbewegung entlang des zweiten Endes des Formers eine ausreichende Eigenstabilität auf, die einen Verschluss des ringförmigen Spalts am zweiten Ende bildet. Daher wird die Masse zwischen der Dichtkante am ersten Ende des Formers und der gehärteten Masse am zweiten Ende des Formers in dem ringförmigen Spalt zwischen dem Former und der Rohrwand gehalten, während der Former entlang des Rohrs bewegt wird.

Die Dichtkante kann von der Zuleitung gebildet werden, die dem ersten Ende des Formers die härtbare Masse zuführt. Alternativ kann die Dichtkante von einer Wand gebildet werden, die am ersten Ende des Formers um den Former umlaufend angeordnet ist. Die Zuleitung, die optional in zwei oder mehr Zuleitungen unterteilt sein kann, die bevorzugt über den Umfang des Formers verteilt sind, können im Bereich der Dichtkante und/oder im Bereich an der Wandung des Formers angeordnet sein. Bevorzugt ist der zumindest eine Auslass, an dem eine Zuleitung bzw. eine Teilleitung der Zuleitung angeschlossen ist, am ersten Ende des Formers zwischen dem zweiten und dem ersten Radius angeordnet.

Das Verfahren hat den Vorteil, eine Rohrauskleidung mit vorbestimmtem Querschnitt zu bilden, da dieser Querschnitt durch den vorbestimmten Abstand zwischen dem Former und der Rohrwand, insbesondere durch die im ersten Radius angeordnete Formungsoberfläche und die im zweiten Radius angeordnete Dichtkante sowie durch die Abstandshalter eingestellt wird. Entsprechend kann das Verfahren auch bei kleineren Löchern oder Hohlräumen in oder hinter der Rohrwand eine Auskleidung mit dem vorbestimmten Querschnitt ausbilden, da der ringförmige Spalt zwischen dem Former und der Rohrwand während des Härtens im Wesentlichen gleich bleibt. Im Unterschied dazu erzeugt ein Verfahren, bei dem kontinuierlich Druck auf eine Masse gegen die Rohrwand ausgeübt wird, die zwischen einer längs des Rohrs angeordneten Blase und der Rohrwand gefüllt ist, nicht immer eine Auskleidung von konstanter Dicke, da die Masse in Ausnehmungen gedrückt werden kann, bis die Blase an der Rohrwand anliegt, ohne dass ein Ausgleich für die Masse in den Ausnehmungen vorgesehen ist.

Der Former kann eine im Umfang kontinuierliche Oberfläche aufweisen, beispielsweise in Form eines Rohrabschnitts. Alternativ kann der Former überlappende Lamellen oder Streifen aufweisen, die sich im Wesentlichen parallel zu seiner Längsachse erstrecken. Solche Lamellen oder Streifen können gegeneinander verschieblich sein und sind bevorzugt von innen federbelastet, um elastisch in einem zweiten Radius angeordnet zu sein, beispielsweise durch ein kompressibles zylindrisches Element, das in dem Former angeordnet ist.

Die Vorrichtung, insbesondere eine Wand am ersten Ende, die Dichtkante und der Former können unabhängig voneinander aus Metall, beispielsweise Metallblech, und/oder aus Kunststoff bestehen. Bevorzugt sind eine Wand und/oder Zuleitung am ersten Ende, die Dichtkante und der Former und zumindest ein daran angebrachter Abstandshalter druckdicht miteinander verbunden.

In dem Verfahren wird vor dem Einbringen der härtbaren Masse eine Schlauchhülle in das Rohr eingebracht, die bevorzugt zumindest nach Einbringen der härtbaren Masse an der Rohrwand anliegt. In dieser Ausführungsform überdeckt die Schlauchhülle Ausnehmungen bzw. Durchbrüche in dem auszukleidenden Rohr, wenn die Masse in den ringförmigen Spalt zwischen dem Former und der Rohrwand eingebracht wird.

Generell hat das Verfahren den Vorteil, dass die härtbare Masse einen hohen Anteil an inerten Füllstoffen aufweisen kann, beispielsweise zumindest 20 Vol.-%, bevorzugt zumindest 30 Vol.-%, zumindest 100 oder zumindest 200 Vol.-% in Bezug auf aushärtende Bestandteile, beispielsweise in Bezug auf reaktive Bestandteile, insbesondere reaktive Kunststoffbestandteile. Füllstoffe können z.B. ausgewählt sein unter Sand, Quarzsand, Quarzmehl, Talkum, Calciumcarbonat, Aluminiumhydroxid, Glashohlkugeln, Fasern, z.B. aus Glas, PET (Polyethylenterephthalat), Kevlar und/oder Polyester, Kohlefasern, und Mischungen dieser Füllstoffe. Reaktive Kunststoffbestandteile können beispielsweise Harze auf Basis von Epoxiden, Polyurethan und Polyester und Mischungen dieser sein. Die Masse kann z.B. ein Epoxymörtel, Polyestermörtel oder ein zementgebundener Mörtel sein.

Als reaktiven Bestandteil kann die härtbare Masse auch schnellhärtenden Zement enthalten.

Optional kann in dem Verfahren vorgesehen sein, eine Ringscheibe an dem Former anzuordnen, die über den Former verschieblich ist und sich zwischen dem ersten und zweiten Radius erstreckt. Eine solche Ringscheibe kann zu Beginn des Verfahrens die in den ringförmigen Spalt eingepumpte Masse an der unkontrollierten Verteilung in den ringförmigen Spalt hindern und bei der Bewegung des Formers entlang des Rohrs, während die Masse in den ringförmigen Spalt gepumpt wird, von der Masse entlang des Formers geschoben werden, bevorzugt unter Beibehaltung einer Position an der Rohrwand. Eine solche Ringscheibe kann anschließend entfernt werden, jedoch bevorzugt an einem Ende der ausgehärteten Masse verbleiben.

Eine Ringscheibe ist bevorzugt in dem Bereich des Formers zwischen einem Abstandshalter und seinem zweiten Ende, das dem ersten Ende gegenüber liegt, angeordnet, sodass sich die Ringscheibe relativ zu dem Former zu dessen zweiten Ende und darüber hinaus bewegen kann, wenn der Former entlang des Rohrs bewegt wird.

Die härtbare Masse wird bevorzugt aus einer Basismischung hergestellt, der ein Starter zugegeben und in diese eingemischt wird. Vorzugsweise wird die Basismasse mittels einer ersten Förderleitung dosiert in einen Mischer gepumpt, der mit der Zuleitung verbunden ist, und ein Starter mittels einer zweiten Förderleitung in den Mischer gepumpt. Der Mischer ist bevorzugt ein statischer Mischer.

Die Zuleitungen bzw. Teilzuleitungen, die die Zuleitung bilden, können einen geringeren Querschnitt als der Ringspalt zwischen erstem und zweitem Radius aufweisen, sodass die härtbare Masse mit kurzer Verweildauer bzw. hoher Fließgeschwindigkeit in den ringförmigen Spalt zwischen dem Former und der Rohrwand gepumpt wird. Alternativ können die Zuleitung bzw. Teilzuleitungen einen Querschnitt aufweisen, der größer als der Ringspalt zwischen erstem und zweitem Radius ist, so dass die Härtungsreaktion bereits in der Zuleitung bzw. in den Teilzuleitungen teilweise ablaufen kann. Z.B. kann die Masse so eingestellt sein, dass sie eine Gesamtreaktionszeit bis zum Erreichen der Eigenstabilität (Ausformzeit) von 5 min aufweist und der Querschnitt der Zuleitung bzw. der Teilzuleitungen eine Verweildauer von 30% der Ausformzeit erlaubt, so dass die verbleibende Dauer der Aushärtung bis zur Eigenstabilität abläuft, während die Masse vom Former gegen die Rohrwand gehalten wird.

Die Härtezeit der Masse kann von einem Fachmann so eingestellt werden, dass die Masse eine Eigenstabilität in dem Zeitraum erreicht, bis zu dem die Masse das zweite Ende des Formers erreicht, z.B. in einem Zeitraum, in dem der Former eine Strecke entlang der Rohrwand bewegt wird, die seiner eigenen Länge längs der Rohrwand entspricht. Die härtbare Masse ist bevorzugt eine selbsthärtende Masse, da sie ohne Einwirkung von Bestrahlung oder Wärme aushärtet.

Die am ersten Ende des Formers angeordnete Dichtkante, insbesondere deren Abschnitt, der im ersten Radius liegt, ist bevorzugt aus einem elastischen Material gebildet. Alternativ oder zusätzlich kann die Dichtkante in Richtung auf das zweite Ende geneigt sein, beispielsweise mit zunehmendem Radius näher am zweiten Ende angeordnet sein. Auf diese Weise kann die Dichtkante durch die in den ringförmigen Spalt gepumpte Masse gegen die Rohrwand gedrückt werden, um den ringförmigen Spalt am ersten Ende des Formers abzudichten. Bevorzugt weist der Former einen Drucksensor an seinem ersten Ende auf und die Zuführung der härtbaren Masse wird gesteuert, um einen vorbestimmten Mindestdruck in dem ringförmigen Spalt zu erreichen. Auf diese Weise ist das Verfahren geeignet, im Falle des Austretens von härtbarer Masse durch die Rohrwand ausreichend Masse durch die Zuleitung zu pumpen, bis der ringförmige Spalt vollständig mit härtbarer Masse gefüllt ist. Ein solcher Drucksensor kann z.B. in Form eines Dehnungsmessstreifens an der Zuleitung oder an dem Former ausgebildet sein.

Die Vorrichtung erlaubt bevorzugt ein Verfahren zur Herstellung einer Rohrauskleidung, bei das auszukleidende Rohr nur von einem Ende zugänglich ist. Denn die Vorrichtung kann von einem Ende des Rohrs in dieses über die auszukleidende Länge eingeschoben werden und beim Verfahren zur Herstellung der Rohrauskleidung zu demselben Ende des Rohrs bewegt werden. Dabei wird die Vorrichtung mit ihrem zweiten Ende voran über die auszukleidende Länge in das auszukleidende Rohr eingeschoben. Für das Einschieben der Vorrichtung in das auszukleidende Rohr nur von einem Ende kann eine Schubstange oder eine motorisch angetriebene Schubeinrichtung verwendet werden.

Die Erfindung wird nun genauer mit Bezug auf die Figuren beschrieben, die schematisch in
- Figur 1 zwei Ausführungsformen der Vorrichtung,
- Figur 2 ein Verfahren und
- Figur 3 eine Ausführungsform des Verfahrens zeigen.

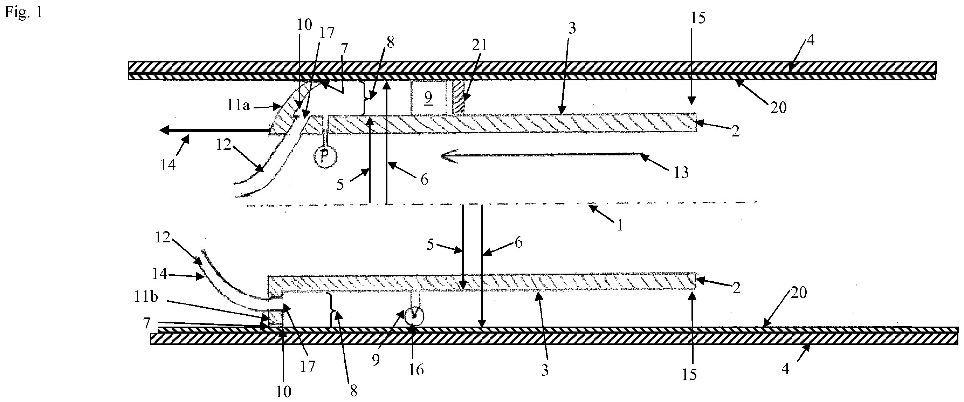

In den Figuren bezeichnen gleiche Bezugsziffern funktionsgleiche Elemente. Figur 1 zeigt im Schnitt entlang der Längsachse 1 des Rohrs und der koaxial angeordneten Vorrichtung beidseitig der Längsachse 1 verschiedene Varianten der Vorrichtung. Der Former 2 ist jeweils zylindrisch ausgebildet und weist generell eine Formungsoberfläche 3 auf, die der Form der Rohrwand 4 in einem Abstand entspricht. Dieser Abstand ist der Abstand zwischen dem ersten Radius 5, in dem die Formungsoberfläche 3 geordnet ist, zum zweiten Radius 6, in dem die Dichtkante 7 angeordnet ist. Der zweite Radius 6 ist zumindest während des Verfahrens gleich dem Innenradius der Rohrwand 4. Bei Rohren mit rundem Innenquerschnitt ist die Formungsoberfläche 3 bevorzugt zylindrisch. Der Former 2 bzw. seine Formungsoberfläche 3 ist umfänglich geschlossen, so dass im Verfahren ein ringförmiger Spalt 8 zwischen der im zweiten Radius 6 angeordneten Rohrwand 4 und der im ersten Radius 5 angeordneten Formungsoberfläche 3 gebildet wird. Die Formungsoberfläche 3 wird von zumindest einem Abstandshalter 9 überragt, der sich bevorzugt bis in den zweiten Radius 6 erstreckt. Die Dichtkante 7 und der zumindest eine Abstandshalter 9 halten den Former 2 während des Bewegens entlang der Längsachse 1 in einem etwa konstanten Abstand zur Rohrwand 4, so dass in den ringförmigen Spalt 8 gepumpte härtbare Masse in den Querschnitt dieses ringförmigen Spalts 8 geformt wird und in diesem härtet. Bevorzugt sind zumindest drei Abstandshalter 9 um den Umfang des Formers 2 bzw. der Formungsoberfläche 3 verteilt angeordnet. Am ersten Ende 10 weist die Vorrichtung eine Wand 11a auf, die sich vom Former 2 bis zur Dichtkante 7 erstreckt, um den ringförmigen Spalt 8 am ersten Ende 10 zu verschließen. Für das Einpumpen härtbarer Masse auf die oder an die Formungsoberfläche 3 bzw. in den ringförmigen Spalt 8 weist die Vorrichtung zumindest eine Zuleitung 12 auf, die an der Formungsoberfläche 3 und/oder an der Wand 11a mündet. Während des Verfahrens wird die Vorrichtung entlang ihrer Längsachse 1 mit dem ersten Ende 10 voran entlang der Längsachse 1 der Rohrwand 4 bzw. des Formers 2 bewegt (Bewegungsrichtung 13). Für diese Bewegung weist die Vorrichtung z.B. ein Zugmittel 14 auf.

Die Wand 11a kann mit zunehmendem Radius gegen das dem ersten Ende 10 gegenüberliegende zweite Ende 15 geneigt sein, so dass die Wand 11a und damit die Dichtkante 7 durch das Einpumpen härtbarer Masse in den ringförmigen Spalt 8 gegen die Rohrwand 4 bzw. gegen die an der Rohrwand 4 angeordnete Schlauchhülle 20 belastet werden kann. Der ringförmige Spalt 8 ist am zweiten Ende 15 offen, so dass die härtbare Masse beim Bewegen der Vorrichtung mit dem ersten Ende 10 voran von der Vorrichtung zurückgelassen wird. Die härtbare Masse ist so eingestellt, dass sie bis zu der Zeit, in der sie von der Vorrichtung an deren zweiten Ende austreten gelassen wird, eine für ihre Eigenstabilität ausreichende Festigkeit aufweist. Bevorzugt ist die härtbare Masse beim Umströmen des Abstandshalters 9 noch hinreichend fließfähig, um sich anschließend zusammenzulegen bzw. eine kontinuierliche Phase zu bilden, die insbesondere umfänglich geschlossen bzw. wasserdicht ist. Generell ist die Wand 11 bzw. die daran angeordnete Dichtkante 7 im zweiten Radius 6 angeordnet. Die Formungsoberfläche 3 des Formers 2 ist im ersten Radius angeordnet, der kleiner als der zweite Radius ist, in dem die Dichtkante 7 angeordnet ist, z.B. wenn sie gegen die Rohrwand 4 anliegt, insbesondere gegen die Rohrwand 4 bzw. gegen die Schlauchhülle 20 belastet ist und entlang der Rohrwand 4 bzw. entlang der Schlauchhülle 20 verschieblich ist. Bevorzugt erstrecken sich die Abstandshalter 9 bis in den zweiten Radius. Die Rohrwand 4 weist einen Radius auf, der gleich dem zweiten Radius 6 ist.

Eine beispielhafte Masse besteht aus dem reaktiven Harz mit 100 Gewichtsteilen mit Bisphenol A/F reaktiv verdünntem Epoxidharz (Laminierharz, erhältlich als Epikure 240), 100 Gewichtsteilen Quarzsand, 5 Gewichtsteilen hydrophober pyrogener Kieselsäure (erhältlich als Aerosil R202, Evonik GmbH), 1 Gewichtsteil Titandioxid (erhältlich als Kronos 2056, Kronos Titan GmbH), das im Mischer mit der Härterzusammensetzung aus 12,8 Gewichtsteilen 3,6-Diazaoctan-1,8-diamin, 5,1 Gewichtsteilen Epoxidharz (erhältlich als Epikote 828LVEL, Momentive Specialty Chemicals Inc.), 3 Gewichtsteilen Nonylphenol, 12,8 Gewichtsteilen Quarzsand F32 (erhältlich von Quarzwerke) und 0,77 Gewichtsteilen pyrogener Kieselsäure, mit Polydimethylsiloxan nachbehandelt (erhältlich als Aerosil 202, Evonik GmbH) gemischt wird.
Die gezeigte Ausführungsform der Vorrichtung weist einen Drucksensor P auf, der den Druck aufnimmt, der angrenzend an den Former durch die härtbare Masse ausgeübt wird. Das Messsignal des Drucksensors P, das bevorzugt für einen Bediener außerhalb des Rohrs angezeigt wird, dient der Überwachung des ausreichenden Einpumpens härtbarer Masse in den ringförmigen Spalt, bzw. zeigt das Entweichen härtbarer Masse durch Löcher in der Rohrwand 4 bzw. in der Schlauchhülle 20 durch Abfallen des Drucks an. Bevorzugt wird das Messsignal des Drucksensors P zur Steuerung des Pumpens der härtbaren Masse bzw. von deren Bestandteilen eingesetzt, um einen vorbestimmten Druck der härtbaren Masse zumindest am ersten Ende 10 aufrecht zu erhalten.

Figur 1 zeigt im unteren Teil eine Variante der Vorrichtung, bei der die am ersten Ende 10 angeordnete Wand 11b radial vom Former 2 ausgeht und die Zuleitung 12 in dieser Wand 11b mündet. Der Abstandshalter 9 ist mit einem Laufrad 16 versehen, das zur Verringerung der Reibung des Abstandshalters 9 entlang der Rohrwand 4 führt.

Generell kann das Zugmittel 14 durch die zumindest eine Zuleitung 12 ausgebildet werden, wie z.B. in Fig. 1 unten gezeigt ist.

Eine Ringscheibe 21 umgreift den Former 2 und ist entlang der Formungsoberfläche 3 verschieblich, vorzugsweise reibschlüssig. Die Ringscheibe 21 erstreckt sich bis in den zweiten Radius 6 über die Formungsoberfläche 3, so dass sie an der Rohrwand 4 anliegen kann und den Querschnitt des ringförmigen Spalts 8 zum zweiten Ende 15 des Formers 2 überdeckt. Beim Füllen des ringförmigen Spalts 8 durch Einpumpen härtbarer Masse wird die Ringscheibe 21 entlang des Formers 2 über dessen zweites Ende 15 geschoben, wobei die Ringscheibe 21 an der härtbaren Masse anhaften kann.

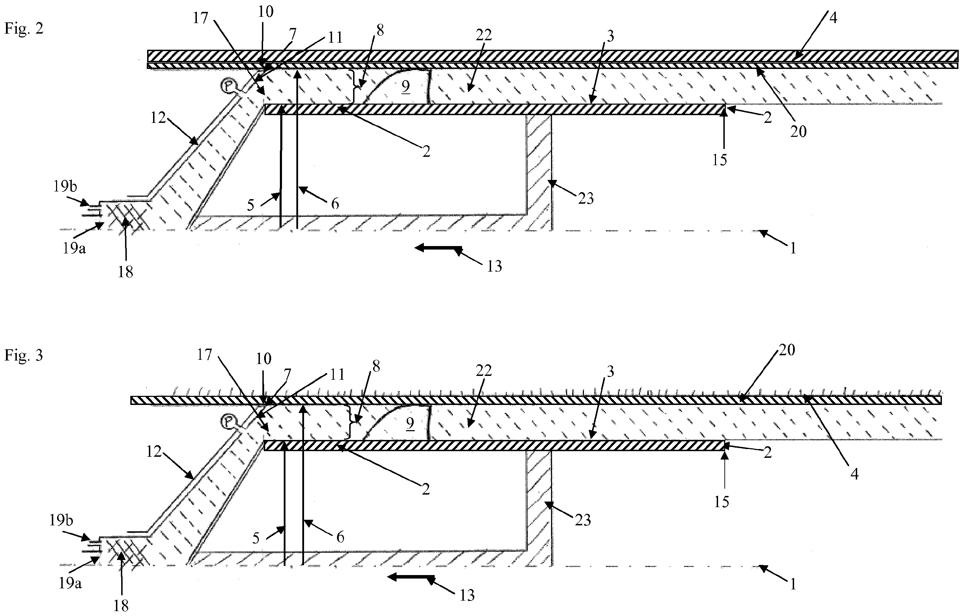

Die Figur 2 zeigt die Vorrichtung und das Verfahren in einer Variante, in der die zumindest eine Zuleitung 12 in einen ringförmigen Auslass 17 mündet, dessen Wandung die Dichtkante 7 bildet. Wie gezeigt kann der Drucksensor P an der Zuleitung im Bereich des Auslasses 17 angeschlossen sein.

Vor der Zuleitung 12 ist ein Mischer 18 angeordnet, an dem wiederum Förderleitungen 19 für die Bestandteile der härtbaren Masse angeschlossen sind, z.B. eine erste Förderleitung 19a für die härtbare Masse, die jedoch keinen Starter enthält, sowie eine zweite Förderleitung 19b für den Starter. Mittels des Mischers 18, dem über die Förderleitungen 19a, 19b die Komponenten für die härtbare Masse zugeleitet werden, werden die Komponenten gemischt und dadurch die Härtungsreaktion gestartet. Auf diese Weise kann eine schnell härtende Masse hergestellt werden und mit kurzer Verweildauer durch die Zuleitung 12 in den ringförmigen Spalt 8 geleitet werden, in dem die Masse bei Bewegung des Formers 2 entlang der Rohrwand 4 eine Eigenstabilität erreicht, wenn das zweite Ende 15 des Formers 2 über sie hinwegbewegt wird.

Der Drucksensor P kann generell an der zumindest einen Zuleitung angeschlossen sein, z.B. an der Förderleitung 19a für härtbare Masse, die keinen Starter enthält, vor oder nach dem Zuführen eines Starters, z.B. vor oder nach einem Mischer.

Zur Verringerung des Anhaftens der härtbaren Masse an der Vorrichtung sind deren Oberflächen, die mit der härtbaren Masse in Kontakt kommen, insbesondere die Formungsoberfläche 3 und die Wand 11, mit einem Trennmittel beschichtet, z.B. Wachs, insbesondere festem Paraffin, oder Polytetrafluorethylen (Teflon).

Die Figur 3 zeigt das Verfahren , bei dem vor dem Herstellen der Rohrauskleidung aus einer härtbaren Masse 22 die Schlauchhülle 20 gegen die Rohrwand 4 angeordnet wird. Die Schlauchhülle 20 kann an der Rohrwand 4 anliegen oder mit Abstand zu dieser angeordnet sein. Die Schlauchhülle 20 kann in das Rohr eingezogen oder eingestülpt werden, wobei die Schlauchhülle 20 auf der Innenseite mit Druck, z.B. Luftdruck, beaufschlagt wird und in dem auszukleidenden Rohr umgestülpt wird. Wenn die Schlauchhülle 20 in dem Rohr vorliegt, wird die Rohrauskleidung wie voranstehend beschrieben in der Schlauchhülle 20 hergestellt, so dass die Schlauchhülle zwischen der Rohrauskleidung und der Rohrwand 4 angeordnet ist. Dabei wird die Schlauchhülle 20 von der Vorrichtung, insbesondere von der Dichtkante 7 und Abstandshaltern 9 bzw. von der in den ringförmigen Spalt 8 gepumpten härtbaren Masse gegen die Rohrwand 4 gedrückt. Diese Ausführungsform hat den Vorteil, Durchbrüche der Rohrwand 4 mittels der Schlauchhülle 20 zu überdecken, so dass die härtbare Masse in geringerem Ausmaß aus dem ringförmigen Spalt 8 in Durchbrüche der Rohrwand 4 austritt.

Die Figuren 2 und 3 zeigen eine innerhalb des Formers angeordnete Stütze 23, die den Former 2 gegen den ersten Radius 5 stützt. Eine solche Stütze, die bevorzugt im axialen Bereich des Formers zwischen dem Abstandshalter 9 und dem zweiten Ende 15 des Formers 2 angeordnet sein kann, ist optional federnd ausgebildet.

**Bezugszeichenliste:**

| | |
|---|---|
| 1 Längsachse | 13 Bewegungsrichtung |
| 2 Former | 14 Zugmittel |
| 3 Formungsoberfläche | 15 zweites Ende |
| 4 Rohrwand | 16 Laufrad |
| 5 erster Radius | 17 Auslass |
| 6 zweiter Radius | 18 Mischer |
| 7 Dichtkante | 19, 19a, 19b Förderleitung |
| 8 ringförmiger Spalt | 20 Schlauchhülle |
| 9 Abstandshalter | 21 Ringscheibe |
| 10 erstes Ende | 22 härtbare Masse |
| 11, 11a, 11b Wand | 23 Stütze |
| 12 Zuleitung | P Drucksensor |

## Patentansprüche

1. Verfahren zur Herstellung einer Rohrauskleidung in einem Rohr durch Einbringen einer härtbaren Masse (22), die durch zumindest einen Auslass (17) in einen ringförmigen Spalt (8) gepumpt wird, der von der Rohrwand (4) und einem davon beabstandeten Former (2) gebildet wird, wobei der Former (2) entlang seiner Längsachse (1) mit seinem ersten Ende (10) voran an der Rohrwand (4) entlang bewegt wird, **dadurch gekennzeichnet, dass** vor dem Einbringen der härtbaren Masse (22) in das Rohr eine Schlauchhülle (20) in das Rohr eingebracht wird und der ringförmige Spalt (8) zwischen der Schlauchhülle (20) und dem Former (2) gebildet wird.

2. Verfahren nach Anspruch 1, **dadurch gekennzeichnet, dass** der Former (2) in einem ersten Radius (5) um die Längsachse (1) eine Formungsoberfläche (3) aufweist, der kleiner ist als ein zweiter Radius (6), in dem die Rohrwand (4) angeordnet ist und dass der Former (2) von der Rohrwand (4) durch eine an seinem ersten Ende (10) angeordnete Wand (11) mit einer Dichtkante (7) beabstandet wird, die im zweiten Radius (6) verschieblich gegen die Rohrwand (4) anliegt, wobei die Wand (11) und die Dichtkante (7) den ringförmigen Spalt (8) am ersten Ende (10) schließen.

3. Verfahren nach einem der voranstehenden Ansprüche, **dadurch gekennzeichnet, dass** der Former (2) durch zumindest einen Abstandshalter (9) von der Rohrwand (4) beabstandet wird, der den Former (2) bis in den zweiten Radius überragt.

4. Verfahren nach Anspruch 3, **dadurch gekennzeichnet, dass** die Abstandshalter (9) in einem axialen Abschnitt des Formers (2) angeordnet sind, in dem die Masse (22) noch ausreichend fließfähig ist, um die Abstandshalter (9) beim Bewegen des Formers (2) entlang des Rohrs zu umströmen und sich anschließend zusammenzulegen.

5. Verfahren nach einem der voranstehenden Ansprüche, **dadurch gekennzeichnet, dass** die härtbare Masse (22) beim Bewegen des Formers (2) bis zum Erreichen des dem ersten Ende (10) gegenüberliegenden zweiten Endes (15) des Formers (2) bis zu einer Eigenstabilität härtet, die den ringförmigen Spalt (8) am zweiten Ende (15) verschließt und ohne den Former (2) den Querschnitt des Ringspalts (8) beibehält.

6. Verfahren nach einem der voranstehenden Ansprüche, **dadurch gekennzeichnet, dass** die härtbare Masse (22) einen Gehalt an inertem Füllstoff von zumindest 30 Vol.-%, bezogen auf die reaktiven Bestandteile, aufweist.

7. Verfahren nach einem der voranstehenden Ansprüche, **dadurch gekennzeichnet, dass** die härtbare Masse (22) durch Zuführen der Bestandteile ohne Starter und des Starters durch getrennte Förderleitungen (19a, 19b) zu einem Mischer (18) hergestellt wird, an den eine mit dem zumindest einen Auslass (17) verbundene Zuleitung (12) angeschlossen ist.

8. Verfahren nach einem der voranstehenden Ansprüche, **dadurch gekennzeichnet, dass** der Druck der härtbaren Masse (22) mittels eines Drucksensors (P) bestimmt wird und die Zuführung der härtbaren Masse (22) in den ringförmigen Spalt (8) gesteuert wird, um einen vorbestimmten Mindestdruck in dem ringförmigen Spalt zu erreichen.

9. Verfahren nach einem der voranstehenden Ansprüche, **dadurch gekennzeichnet, dass** das Rohr von nur einem Ende für den Former (2) zugänglich ist und vor dem Einbringen der härtbaren Masse (22) der Former (2) durch dieses Ende über die Länge in das Rohr eingeschoben wird, über die die Rohrauskleidung hergestellt wird.

10. Verfahren nach einem der voranstehenden Ansprüche, **dadurch gekennzeichnet, dass** eine über den Former (2) verschiebliche Ringscheibe (21) angeordnet ist, die sich über den ringförmigen Spalt (8) erstreckt und bei der Bewegung des Formers (2) entlang des Rohrs, während die Masse in den ringförmigen Spalt (8) gepumpt wird, von der Masse entlang des Formers (2) geschoben wird.

11. Vorrichtung zur Verwendung in einem Verfahren zur Herstellung einer Rohrauskleidung in einem Rohr durch Einbringen einer härtbaren Masse (22), wobei die Vorrichtung einen Former (2) aufweist, der in einem ersten Radius (5) um seine Längsachse (1) eine Formungsoberfläche (3) aufweist und an seinem ersten Ende (10) eine Wand (11) mit einer Dichtkante (7) aufweist, die in einem zweiten Radius (6) zur Längsachse (1) angeordnet ist, der größer als der erste Radius (5) ist, mit zumindest einem vom ersten Ende (10) beabstandeten Abstandshalter (9), der sich von dem Former (2) bis in den zweiten Radius (6) erstreckt, der gleich dem Radius der Rohrwand ist, **gekennzeichnet durch** zumindest einen an dem ersten Ende (10) mündenden Auslass (17) zur Zuführung der härtbaren Masse an die Formungsoberfläche (3).

12. Vorrichtung nach Anspruch 11, **dadurch gekennzeichnet, dass** die Formungsoberfläche (3) zylindrisch ist.

13. Vorrichtung nach einem der Ansprüche 11 bis 12, **dadurch gekennzeichnet, dass** der Former (2) zumindest einen Abstandshalter (9) aufweist, der den Former (2) in einem unbelasteten Zustand bis zu 20 % über den zweiten Radius überragt und in einem belasteten Zustand den Former (2) bis in den zweiten Radius (6) überragt.

14. Vorrichtung nach einem der Ansprüche 11 bis 13, **dadurch gekennzeichnet, dass** an dem Auslass (17) eine Zuleitung (12) angeschlossen ist, die mit einem Mischer (18) verbunden ist, an den getrennte Förderleitungen (19a, 19b) für einen Starter der Masse (22) und die Bestandteile der Masse (22) ohne den Starter angeschlossen sind.

15. Vorrichtung nach einem der Ansprüche 11 bis 14, **gekennzeichnet durch** einen Drucksensor, der eingerichtet ist, den Druck am ersten Ende (10) des Formers (2) und/oder an einer an dem Auslass (17) angeschlossenen Zuleitung (12) zu messen, wobei die Vorrichtung eingerichtet ist, die härtbare Masse (22) bis zum Erreichen eines vorgegebenen Mindestdrucks durch den Auslass (17) zu pumpen.

## Claims

1. Process for producing a lining for a pipe within a pipe by introducing a hardenable mass (22) which is pumped through at least one outlet (17) into a ring-shaped gap (8) formed by the wall of the pipe (4) and a former (2) spaced therefrom, wherein the former (2) is moved along its longitudinal axis (1) with its first end (10) leading along the wall of the pipe (4), **characterized in that** prior to introducing the hardenable mass (22) into the pipe, a tubular sheath (20) is introduced into the pipe and the ring-shaped gap (8) is formed between the tubular sheath (20) and the former (2).

2. Process according to claim 1, **characterized in that** the former has a forming surface (3) around the longitudinal axis (1) in a first radius (5) which is smaller than a second radius (6), in which the wall of the pipe (4) is arranged, and that the former (2) is spaced from the wall of the pipe (4) by a wall (11) arranged at its first end (10) and having a sealing edge (7), which in the second radius (6) slidably lies against the wall of the pipe (4), wherein the wall (11) and the sealing edge (7) close the ring-shaped gap (8) at the first end (10).

3. Process according to one of the preceding claims, **characterized in that** the former (2) is spaced from the wall of the pipe (4) by at least one spacer (9) which projects over the former (2) into the second radius.

4. Process according to claim 3, **characterized in that** the spacers (9) are arranged in an axial section of the former (2) in which the mass (22) still is sufficiently free-flowing for flowing around the spacers (9) upon movement of the former (2) along the pipe, and to subsequently converge.

5. Process according to one of the preceding claims, **characterized in that** the hardenable mass (22) hardens upon movement of the former (2) up to reaching the second end (15) of the former (2) opposite the first end (10) up to an inherent strength which closes the ring-shaped gap (8) at the second end (15) and without the former (2) maintains the cross-section of the ring-shaped gap (8).

6. Process according to one of the preceding claims, **characterized in that** the hardenable mass (22) has a content of an inert filler of at least 30% per volume in relation to the reactive components.

7. Process according to one of the preceding claims, **characterized in that** the hardenable mass (22) is produced by feeding the components without a starter and the starter by separate feeding lines (19a, 19b) to a mixer (18), to which a feed line (12) is connected which is connected to the at least one outlet (17).

8. Process according to one of the preceding claims, **characterized in that** the pressure of the hardenable mass (22) is determined by means of a pressure sensor (P) and the feeding of the hardenable mass (22) into the ring-shaped gap (8) is controlled in order to obtain a predetermined minimum pressure within the ring-shaped gap.

9. Process according to one of the preceding claims, **characterized in that** the pipe only from one end is accessible to the former (2) and prior to introducing the hardenable mass (22) the former (2) is pushed through this end into the pipe for that length over which the lining of the pipe is produced.

10. Process according to one of the preceding claims, **characterized in that** around the former (2) a slidable ring-shaped disc (21) is arranged, which extends over the ring-shaped gap (8) and which is pushed along the former (2) by the mass upon movement of the former (2) along the pipe while the mass is pumped into the ring-shaped gap (8).

11. Device for use in a process for producing a lining of a pipe within a pipe by introducing a hardenable mass (22), wherein the device has a former (2) which in a first radius (5) about its longitudinal axis (1) has a forming surface (3) and at its first end (10) has a wall (11) having a sealing edge (7) which is arranged in a second radius (6) about the longitudinal axis (1) which is larger than the first radius (5), having at least one spacer (9) spaced from the first end (10), which spacer extends from the former (2) into the second radius (6), which is equal to the radius of the wall of the pipe, **characterized by** at least one outlet (17) discharging at the first end (10) for feeding the hardenable mass to the forming surface (3).

12. Device according to claim 11, **characterized in that** the forming surface (3) is cylindrical.

13. Device according to one of claims 11 to 12, **characterized in that** the former (2) has at least one spacer (9) which in an unstressed state projects over the former (2) up to 20% over the second radius and in a stressed state projects over the former (2) into the second radius (6).

14. Device according to one of claims 11 to 13, **characterized in that** to the outlet (17) a feeding line (12) is connected, which is connected with a mixer (18) to which separate feeding lines (19a,19b) are connected for a starter of the mass (22) and for the components of the mass (22) without the starter.

15. Device according to one of claims 11 to 14, **characterized by** a pressure sensor which is arranged to measure the pressure at the first end (10) of the former (2) and/or at a feed line (12) connected to the outlet (17), wherein the device is arranged to pump the hardenable mass (22) through the outlet (17) until reaching a predetermined minimum pressure.

## Revendications

1. Procédé de fabrication d'un revêtement de tube dans un tube par introduction d'une masse durcissable (22), laquelle est pompée à traves au moins une sortie (17) pratiquée dans une fente annulaire (8), laquelle est constituée de la paroi tubulaire (4) et d'un moule (2) située à une certaine distance de celle-ci, où le moule (2) est déplacé le long de son axe longitudinal (1) avec sa première extrémité vers l'avant contre la paroi tubulaire (4), **caractérisé en ce qu'**avant l'introduction de la masse durcissable (22) dans le tube, on introduit une gaine de tuyau (20) dans le tube et la fente annulaire (8) est formée entre la gaine de tuyau (20) et le moule (2).

2. Procédé selon la revendication 1, **caractérisé en ce que** le moule (2) présente dans un premier rayon (5) une surface de moulage (3) autour de l'axe longitudinal (1), premier rayon qui est plus petit qu'un second rayon (6) dans lequel la paroi tubulaire (4) est prévue, et que le moule (2) est situé à une certaine distance de la paroi tubulaire (4) par le biais d'une paroi (11) muni d'un bord étanche et prévue au niveau de la première extrémité dudit moule, lequel bord étanche est mobile contre la paroi tubulaire (4) dans le second rayon (6), dans lequel la paroi (11) et le bord étanche (7) referment la fente annulaire (8) au niveau de la première extrémité (10).

3. Procédé selon l'une des revendications précédentes, **caractérisé en ce que** le moule (2) est situé à une certaine distance de la paroi tubulaire (4) par le biais d'au moins une entretoise (9), laquelle dépasse du moule (2) jusqu'au second rayon.

4. Procédé selon la revendication 3, **caractérisé en ce que** les entretoises (9) sont prévues dans une section axiale du moule (2) dans lequel la masse (22) est encore suffisamment fluide pour s'écouler autour des entretoises (9) pendant le mouvement du moule (2) le long du tube pour ensuite se polymériser.

5. Procédé selon l'une des revendications précédentes, **caractérisé en ce que** la masse durcissable (22) durcit jusqu'à atteindre sa stabilité intrinsèque pendant le mouvement du moule (2) jusqu'à la seconde extrémité (15) du moule (2), extrémité opposée à la première extrémité (10), laquelle masse referme la fente annulaire (8) au niveau de la seconde extrémité (15) et maintient la section transversale de la fente annulaire (8) sans le moule (2).

6. Procédé selon l'une des revendications précédentes, **caractérisé en ce que** la masse durcissable (22) présente une teneur en matériau de remplissage inerte d'au moins 30 % en volume par rapport aux parties constitutives réactives.

7. Procédé selon l'une des revendications précédentes, **caractérisé en ce que** la masse durcissable (22) s'obtient par acheminement des parties constitutives sans initiateur d'une part et de l'initiateur d'autre part, par des conduits séparés (19a, 19b) à un mélangeur (18), au niveau duquel est connectée une conduite d'arrivée (12) reliée à ladite au moins une sortie (17).

8. Procédé selon l'une des revendications précédentes, **caractérisé en ce que** la pression de la masse durcissable (22) est définie à l'aide d'un capteur de pression (P) et que la conduite d'arrivée de la masse durcissable (22) est guidée à travers la fente annulaire (8) pour atteindre une pression minimale prédéterminée dans la fente annulaire.

9. Procédé selon l'une des revendications précédentes, **caractérisé en ce que** le tube n'est accessible que depuis une extrémité pour le moule (2) et qu'avant l'introduction de la masse durcissable (22), on enfonce le moule (2) à travers ladite extrémité sur la longueur dans le tube, longueur sur laquelle le revêtement de tube sera réalisé.

10. Procédé selon l'une des revendications précédentes, **caractérisé en ce qu'**un disque annulaire (21) mobile sur tout le moule (2) est prévu, disque qui s'étend sur toute la fente annulaire (8) et qui est repoussé le long du moule par la force de la masse, pendant le mouvement du moule (2) le long du tube, pendant le pompage de la masse dans la fente annulaire (8).

11. Dispositif pour utilisation avec un procédé de fabrication d'un revêtement de tube dans un tube par introduction d'une masse durcissable (22), dans lequel le dispositif présente un moule (2) qui lui-même présente dans un premier rayon (5) une surface de moulage (3) autour de son axe longitudinal (1) et présente une paroi (11) pourvue d'un bord étanche (7) au niveau de sa première extrémité, bord étanche prévu dans un second rayon (6) autour de l'axe longitudinal (1), lequel rayon est plus grand que le premier rayon (5), avec au moins une entretoise (9) située à une certaine distance de la première extrémité (10) et de rayon égal à celui de la paroi tubulaire, laquelle entretoise s'étend depuis le moule (2) jusqu'au second rayon (6), **caractérisé par** au moins une sortie (17) débouchant dans la première extrémité et permettant d'acheminer la masse durcissable à la surface de moulage (3).

12. Dispositif selon la revendication 11, **caractérisé en ce que** la surface de moulage (3) est cylindrique.

13. Dispositif selon l'une des revendications 11 ou 12, **caractérisé en ce que** le moule (2) présente au moins une entretoise (9) qui dépasse du moule (2) en l'absence de contrainte jusqu'à 20% au-dessus du second rayon et, en présence de contrainte, dépasse du moule (2) pour pénétrer dans le second rayon (6).

14. Dispositif selon l'une des revendications 11 à 13, **caractérisé en ce qu'**une conduite d'arrivée (12) est connectée à la sortie (17), laquelle conduite est reliée au mélangeur (18) auquel sont connectées deux conduites d'acheminement séparées (19a, 19b) pour un initiateur de la masse (22) et pour les parties constitutives de la masse (22) sans l'initiateur.

15. Dispositif selon l'une des revendications 11 à 14, **caractérisé par** un capteur de pression qui est prévu pour mesurer la pression à la première extrémité (10) du moule (2) et/ou au niveau d'une conduite d'arrivée (12) connectée à la sortie (17), dans lequel le dispositif est prévu pour pomper à travers la sortie (17) la masse durcissable (22) jusqu'à ce qu'elle atteigne la pression minimale prédéterminée.
